# EUROPEAN PATENT APPLICATION

(11) **EP 0 536 341 A1**
(43) Date of publication of application: **14.04.1993**
(21) Application number: 92901364.7
(22) Date of filing: 10.12.1991
(51) Int. Cl.: B60R 25/00

(54) **NEW ANTI-THEFT GEAR CHANGE LEVER FOR MOTOR VEHICLES**

(71) Applicant: SALA CORTS, Juan Carlos, E-46600 Alzira (ES)
(72) Inventor: SALA CORTS, Juan Carlos, E-46600 Alzira (ES)
(74) Representative: Sanz-Bermell Martinez, Alejandro
(86) International application number: ES9100084
(87) International publication number: WO9210386

(57) **Abstract**

Gear change lever (1) having a lock (4) in the lever grip which pushes or retracts a rod (24) arranged in the lower part of the joint (3) to the gearbox, which alternatingly, allows to use the gear change lever or releases its connection with the gearbox thereby making the lever useless. Application: anti-theft gear change lever for vehicles.

## Description

The present invention consists of a gear change lever that is a fundamental part in the moving of vehicles by their own power, which has a device which can lock the lever in use for carrying out its normal purpose, and which can also free it, so that it can turn around a lower shaft, thus preventing any gear from being engaged, and also from any forcing of movement, since its movement is free.

There exist certain gear change levers provided with mechanisms of greater or lesser complexity that are designed to be extracted and taken with the user wherever he goes, as well as being provided with a possible joint through which these are inserted between hooks held by a lock. There is also a gear change lever that locks the change mechanism by means of a lock. This lever has the disadvantage that it resists attempts to move it by its lock, so that there will always be a possibility of force being applied against this resistance.

The registered antecedents known of consist of an anti-theft lever E-U 290 779, consisting of a rod or column lying in parallel to said lever, that can be joined by means of a lock and locked in a parallel position to said column, thus preventing its movement.

The anti-theft lever E-U 256 707 consists of a cover that is fixed to the floor of the vehicle so that an upper window enables or prevents said lever from being used, this window being activated by means of a lock.

E-U 243 690 consists of a lever made up of a joint that allows this to be folded down against the floor of the vehicle where it is secured by means of a clamp with a lock.

E-U 239 098 consists of a part provided with a lock that joins the gear change lever to the hand brake after this has been operated.

The present invention is different to the aforementioned ones through its principles, its operation and its safety. The lever that is the subject of this patent has a mechanism that frees its connection with the gearbox, in such a way that its articulation or movement is possible, but without the effect of engaging any gear whatsoever.

In order to make the explanation that is to follow clearer or more intelligible, two sheets of drawings are enclosed with this statement, forming a part of the same. These drawings consist of three figures that show an example of the essence of what is constituted by this invention.

In Figure 1 an exploded drawing of this lever is seen in one of its embodiments.

Figure 2 shows a cross section view in the position for use. On its right, indicated as 2a, a second embodiment of the same invention is shown.

Figure 3 shows a cross section view in the anti-theft position. On its right, indicated as 3a, the second embodiment mentioned of the same invention is shown.

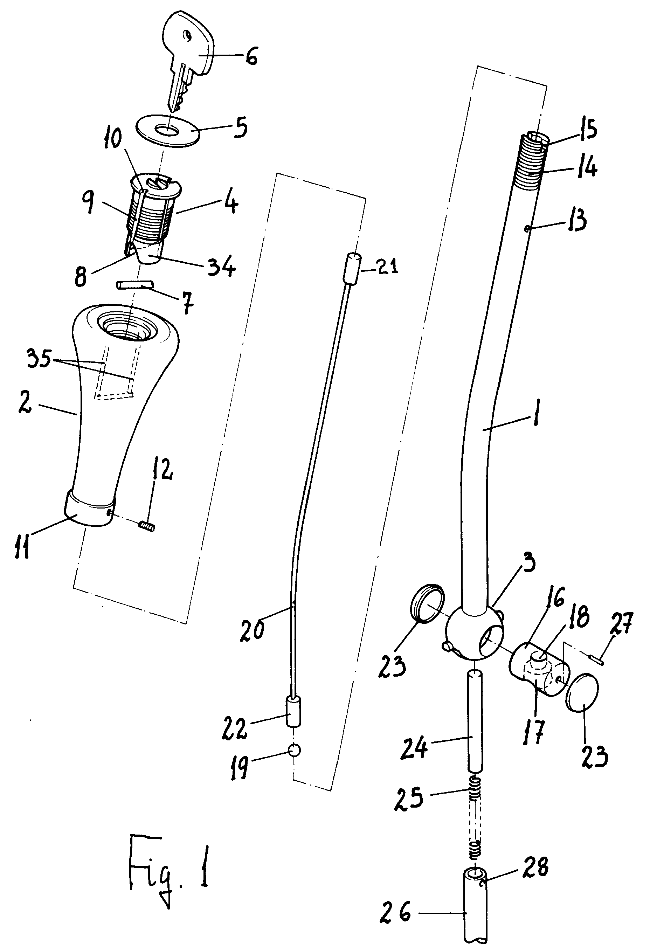

Figure 1 shows an exploded view of the lever, in which 1 indicates the shank that holds the mechanism, which has an upper part 2 forming a grip, and a lower part 3, that constitutes a connection with the gear change of the vehicle in question.

The upper part, within the knob or grip 2 has a lock 4 on which there is a cap and which is operated by means of a key 6. This lock is inserted by a thread into the inner part of said grip. Its moving end 34, which is operated by the turning of the key, works on a pin 7, and is symmetrical in a wedge shape 8, through whose turning the pin, keeping its orientation, moves along a slot provided in the inside of the grip 35.

Along its body the lock has slots 9 that coincide with recesses 10 in the keyhole escutcheon, visible from the outside so that a prodding tool can be inserted and, from the outside, operate pin 7 in the position in which both coincide, that is to say the one in which the lever can be used, so facilitating its dismounting. One possible device in this part is that of a lock that has two pins, one as a guide and a second one being operated by the key, in such a way that this second one can be inserted in two housings, one above and one below, with the body of the lock being moved.

The base of the grip has a screw 12 joined to ring 11 that, when said grip has been threaded onto the body 1 by means of said thread 14, prevents its turning by acting on the recessed hole 13. The body 1 has a slot at its upper end, numbered 15, that coincides with pin 7.

Within the body a part 20 is inserted which consists of a rod, preferably flexible, but of one sole size and not compressible, which has two heads, one at the top 21 and one at the bottom 22.

As the lock 4 works, the pin will tend to descend, pressing on the slot 15, and so on head 21 of part 20. It will press on said part 20 and make lower head 22 move downward, this being close to head 3, so that in this embodiment, it presses on ball 19 which is secured by part 16 that is fixed by the screw 27 in housing 18. This ball in turn pushes rod 24 joined to the part that is connected to the gearbox 26, pressed on by spring 25, and fixed by screw 28. The locking and unlocking is carried out when, by the force exerted by pin 7 through heads 21 and 22, on being inserted into slot 15, this pushes the ball that also pushes the rod, 24, leaving the shaft made up of part 16 free, so being able to turn. If the pin is lifted, rod 24 is inserted into the orifice 17 up to shank 1 so carrying out the locking. Since this is provided with a spring 25, its effect does not depend on exact alignment, and when, by the movement of the lever around the shaft made up of part 16, this rod finds the right orientation it is inserted into the lower orifice of part 1, so locking and enabling normal use of the gear lever.

Part 3 is provided with covers 23 that form an outer surface close to that of a sphere, with which this is adapted to the inside of the base of the joint of the lever.

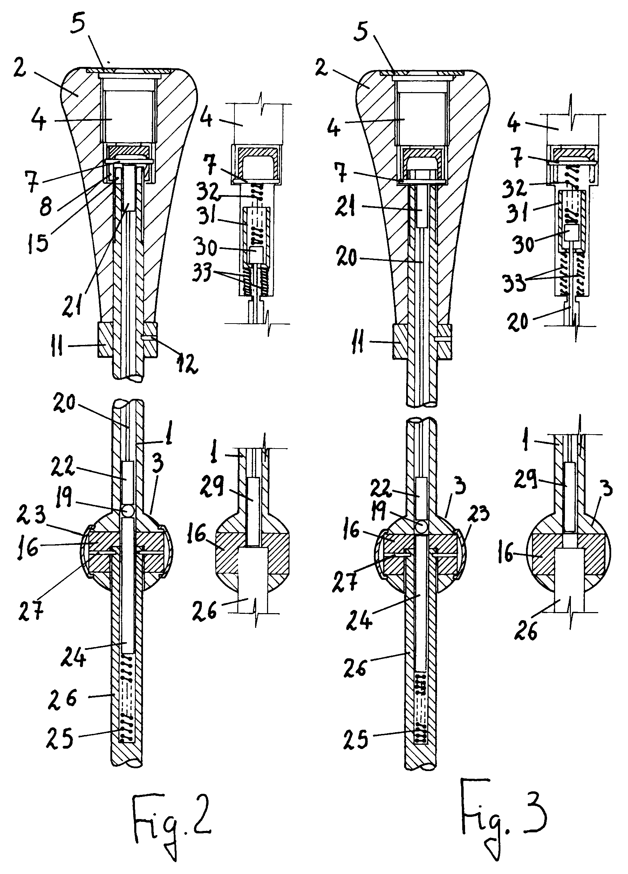

Figure 2 shows a cross section view of the lever, in which we can appreciate the items previously indicated in figure 1.

The position that this figure shows is that of the lever in operation, that is, the one in which the lever can operate the gearbox. Rod 24 can be seen inserted within shank 1 due to having pushed ball 19 and the lower head 22 of part 20, so intervening in the articulation defined by shaft 16 that is thus made rigid, as an intermediary part between the head or grip of the lever and the gearbox.

One possible embodiment of the same invention appears in the figure on the right indicated as 2a, in which we see that the lock 4 operates on the pin 7 under which it pushes on a spring 32 that forces downward the upper head 30 of the inner rod 20 (in figure 2) compressing the spring 33 by means of the outer part 31, and consequently, rod 29 is inserted inside head 16, producing the locking of this joint.

Figure 3 shows a view of this same part, in the non-operating position, that is, where operation on this makes it turn on its axis without transmitting any force onto the gearbox.

In this figure we can see, numbered as 22, the end of the inner rod that by pushing ball 19 has pushed in turn rod 24, that remains in a position so as to enable the turning of the rod with respect to the lower part on shaft 16. Figure 3a shows a view of the possible embodiment that we describe in figure 2a, in which the pin 7 is seen lifted up by the pressure of spring 32, with part 31 also being impelled by the lower spring 33, and with head 30 also being pushed up by the lower neck of part 33. The lower part determines the unlocking of part 3 of rod 1 by the extraction of head 29 that consequently takes place, the latter previously having locked joint 16.

It should be noted that in the operation of both embodiments, the effect of locking or unlocking is carried out in inverse positions as regards the pin, since this is impeller of the unlocker in one case and of the locker in the second embodiment.

## Claims

1. A new anti-theft gear change lever for motor vehicles, characterized in that it comprises a shank (1) or lever, fitted with an inner channel along which runs a core (20) fitted with two heads (21, 22) at its ends, at the upper end of which there is a lock (4) whose operation pushes on or enables the lifting of said core through its moving end (34) that moves a pin (7) made up of a rod, cable or similar (20) that has a lower head (22) which in accordance with its position in relation to that of the lower terminal (34) of the lock, alternately and according to the turning of said lock, either locks or unlocks the anchorage of the actual lever itself (1), to the selector (26) of the gear change, by means of the movement of the core (29) at its lower end, that pushes or is pushed by a rod or moving piece placed on the lower or upper part, provided with a return spring.

2. A new gear change lever, according to claim 1, characterized in that the lock has at its upper end two small recesses (10) that allow the access of a prodding tool to the pin (7) when the lock is in a certain position.

3. A new lever, according to claim 1, characterized in that the grip or handle has a guide or channel (35) up to the upper part at whose end the pin (7) is housed.

4. A new lever, according to claims 1 and 2, characterized in that the upper end of the lever (1) has a groove (15) that can house the pin (7) and consequently press on or free the head (21) of the core (20), with the grip (2) and the lever (1) being linked by a thread (14) whose movement locks said pin inserted into its housing (15).

5. A new lever, according to claim 1, characterized in that the lower joint is made up of a head in a preferentially spherical form (3) that has a body below it (16) that constitutes its turning axis, provided with a hole (18) and a lower rod (24) or alternatively an upper pin (29) whose movement is in relation to the open or closed position of the lock (4), these being impelled by springs linked to the end of the corresponding part.
